# DEMANDE DE BREVET EUROPEEN

(11) **EP 1 721 777 A2**
(43) Date de publication de la demande: **15.11.2006**
(21) Numéro de dépôt: 06300333.9
(22) Date de dépôt: 05.04.2006
(51) Int. Cl.: B60N 2/30, B60N 2/26

(54) **Banquette à assise modulable dans un véhicule automobile**

(30) Priorité: 12.05.2005 FR 0551236
(71) Demandeur: Renault s.a.s., 92100 Boulogne Billancourt (FR)
(72) Inventeur: Legrand, Jean-Pierre, 28300, Bercheres Saint Germain (FR)

(57) **Abrégé**

Banquette (10) de véhicule comprenant une assise (12) à au moins « deux places » modulable pour permettre le transport sécurisé d'un enfant caractérisé en ce qu'une partie (16) de l'assise (12) formant une place, munie de moyens de fixation (18), est mobile pour se fixer sur une autre place (24) de la banquette (10) de manière à être utilisée en tant que réhausse d'assise.

## Description

L'invention concerne des banquettes de véhicule automobile et en particulier une banquette à assise modulable pour transporter, de manière sécurisée, un enfant.

Les réglementations actuellement en vigueur nécessitent que les enfants soient maintenus par une ceinture de sécurité lorsqu'ils sont transportés dans un véhicule automobile.

Dans le cas des jeunes enfants voyageant assis dans un véhicule automobile et en particulier dans le cas des enfants ayant entre trois et dix ans, il est nécessaire de prévoir des sièges spécialement adaptés pour permettre aux enfants de voyager dans une position confortable et dans de bonnes conditions de sécurité.

Dans la mesure où les sièges de passagers d'un véhicule automobile doivent pouvoir être utilisés successivement par des adultes et par des enfants, on a proposé des moyens d'adaptation de ces sièges tels que des réhausseurs qui permettent de transformer le siège pour adulte en siège pour enfant.

Les réhausseurs vendus séparément du véhicule qui sont destinés à être posés et fixés sur la banquette arrière ont pour inconvénient de présenter un encombrement en largeur limitant le nombre de passagers pouvant voyager sur la banquette arrière.

En outre, le stockage de ces réhausseurs prend une place importante à l'intérieur du véhicule, par exemple dans le coffre, lorsqu'ils ne sont pas employés. Enfin, dans le cas où le montage du réhausseur est réalisé de manière défectueuse, la retenue de l'enfant en cas de choc risque de ne plus être assuré de manière satisfaisante, si bien que les conditions de sécurité du transport de l'enfant ne sont pas obtenues de manière sûre.

A cet effet, la publication FR 2 707 219 décrit un réhausseur intégré à un siège de véhicule ou à une banquette arrière du véhicule qui est mobile entre une position abaissée, dans laquelle il constitue une partie de l'assise du siège de véhicule dans sa configuration d'utilisation par un adulte et une position relevée et reculée vers le dossier du siège de véhicule, dans laquelle il constitue l'assise d'un siège pour enfant.

Une telle réhausse comporte une garniture portée par un support rigide qui est monté pivotant sur le soubassement du siège de véhicule par l'intermédiaire d'un ensemble articulé comportant deux paires de bielles parallèles entre elles pour constituer une structure en parallélogramme.

De tels dispositifs sont complexes et ne permettent pas d'obtenir un très bon confort du siège, lorsque celui-ci est utilisé par un adulte et un très bon confort et une grande sécurité, lorsqu'il est utilisé par un enfant. En particulier, l'enfant peut être amené à réaliser le déverrouillage de la réhausse en position relevée, de manière accidentelle.

L'objet de l'invention est une banquette à assise modulable améliorée pour véhicule automobile.

A cet effet, l'invention fournit une banquette de véhicule comprenant une assise à au moins « deux places » modulable pour permettre le transport sécurisé d'un enfant caractérisé en ce qu'une partie de l'assise formant une place, munie de moyens de fixation, est mobile pour se fixer sur une autre place de la banquette de manière à être utilisée en tant que réhausse d'assise.

Selon le mode de réalisation préféré de l'invention, l'assise peut comprendre « trois places » et la partie mobile de ladite assise peut se fixer sur l'une des deux autres places de la banquette.

Selon ce même mode de réalisation, la partie mobile peut être l'assise centrale de la banquette.

Avantageusement, un évidement peut être libéré pour constituer une zone de rangement disponible pour les passagers de la banquette lorsque la partie mobile est utilisée en tant que réhausse d'assise.

Avantageusement encore, les moyens de fixations peuvent être des pattes inférieures d'accrochage qui sont destinées à coopérer avec des éléments d'ancrage.

De préférence, ces pattes inférieures d'accrochage peuvent être constituées de deux éléments mobiles et les éléments d'ancrage peuvent être des boucles en fil métallique.

Selon un mode de réalisation de l'invention, la partie mobile peut se verrouiller ou déverrouiller de l'assise en actionnant une poignée située sous ladite partie permettant d'écarter les deux éléments formant le moyen de fixation.

De préférence, il s'agira d'une banquette arrière de véhicule.

Enfin, lorsque la partie mobile de ladite assise se fixe sur l'une des deux autres places de la banquette, lesdites places peuvent se recentrer vers le milieu afin de les éloigner des portes latérales pour améliorer le confort des passagers.

L'invention est maintenant décrite en référence aux dessins annexés, non limitatifs dans lesquels :
- la figure 1 est une vue en perspective de dessus de la banquette, selon l'invention, l'assise se trouvant dans une configuration « trois places »,
- la figure 2 est une vue en perspective de dessus de la banquette, selon l'invention, l'assise se trouvant dans une configuration « deux places » dont l'une est adaptée pour le transport d'enfant, et
- la figure 3 est une vue en perspective du morceau d'assise retirée de la banquette avec ses moyens de fixation.

On définit les termes avant et arrière par rapport à la direction longitudinale du véhicule, l'avant désignant le sens de déplacement normal du véhicule, et l'arrière le sens opposé.

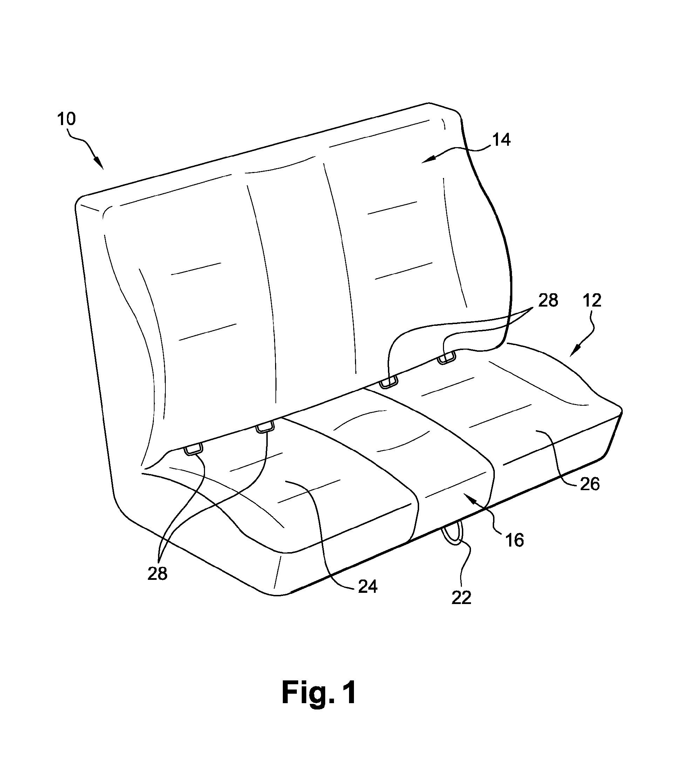

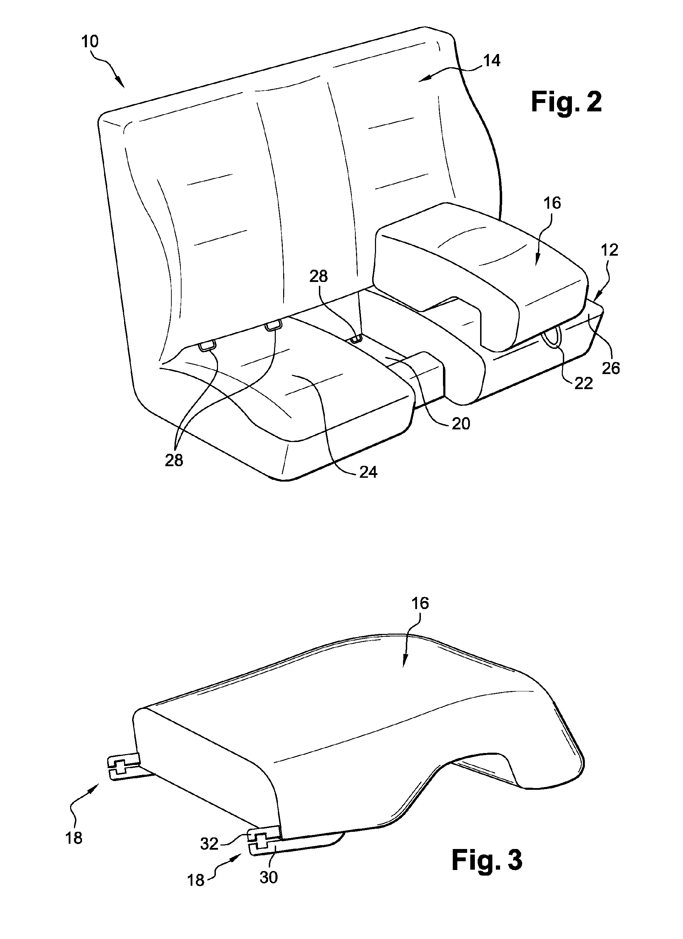

Sur les figures 1 et 2, on a représenté une banquette arrière 10 de véhicule automobile, réalisée conformément à l'invention.

La banquette 10 comprend une assise 12 et un dossier 14.

Le dossier 14 peut être réalisé de façon quelconque sans sortir du cadre de l'invention. Il peut notamment être réalisé d'un seul tenant ou en deux parties, comme représenté, avec ou sans appui-tête, etc.

L'assise 12 comprend une ossature (non représentée), une partie principale fixée à l'ossature et une partie 16 supportée de façon mobile par l'ossature possédant des moyens de fixation 18 pour la retirer et la déplacer rapidement.

Dans le mode de réalisation représenté, la partie principale de l'assise 12 est constituée de deux coussins d'assise latéraux 24 et 26 fixés sur l'ossature de l'assise 12.

La partie mobile 16 est un coussin d'assise centrale muni de moyens de fixation 18. Les moyens de fixation 18 sont deux pattes inférieures d'accrochage, une de chaque côté de la partie 16, qui présentent deux éléments mobiles 30 et 32 et qui s'étendent depuis la structure de la partie 16 pour coopérer avec deux éléments d'ancrages associés 28. Ces éléments d'ancrage 28 sont, par exemple, des boucles en fil métallique qui sont solidarisées avec la structure de la banquette 10. Ces éléments d'ancrage 28 sont conformés et dimensionnés pour retenir la partie 16 lorsque le véhicule subit un choc.

Selon le mode de réalisation représenté sur la figure 2, les éléments d'ancrage 28 sont présents, d'une part, entre le dossier et chacun des deux coussins d'assise latéraux 24 et 26 de manière à fixer la partie mobile 16 sur l'un des coussins et, d'autre part, disposés latéralement sur le fond de l'évidemment 20, créé par le retrait de la partie mobile 16, pour que cette dernière puisse reconstituer la banquette 10 et accueillir, par exemple, trois utilisateurs.

Lorsque l'assise est en configuration « trois places » telle que représentée sur la figure 1 , les moyens de fixation 18 de la partie mobile 16 sont solidaires des éléments d'ancrage 28 se trouvant dans l'évidemment 20. Cette configuration « trois places » de la banquette est classique et permet, par exemple, le transport de trois adultes dans une position confortable.

Pour passer en configuration « deux places » dont l'une permet le transport d'un enfant, l'utilisateur doit retirer la partie mobile 16 de l'assise 12 grâce à une poignée de déverrouillage 22 située sous le nez de la partie mobile 16 de l'assise 12. En tirant sur cette poignée 22, les pattes d'accrochage 30 et 32 vont s'écarter pour libérer ladite partie 16 des éléments d'ancrage 28. Cette dernière va ensuite se disposer sur l'un des coussins d'assise latéraux 24 ou 26, munis des éléments d'ancrage 28, grâce à ses moyens de fixation 18. En effet, les éléments 30 et 32 des pattes d'accrochage peuvent s'écarter, d'une part, par entrée en force dans les éléments d'ancrage 28 ou d'autre part, par actionnement de la poignée 22.

Une fois disposée, la partie mobile 16 permet le transport confortable et sécurisé d'un enfant. Par ailleurs, l'évidemment 20, laissé libre par la partie 16, présente l'avantage d'être utilisable en tant que zone de rangement d'objets disponible pour les passagers de la banquette 10 dans cette configuration « deux places ».

Le passage de la configuration « deux places » à la configuration « trois places » s'effectue en déverrouillant la partie mobile de ces moyens d'ancrage présents sur l'un des coussins 24 ou 26 par actionnement de la poignée 22, puis en fixant cette partie 16 dans l'évidemment 20 de la manière décrit précédemment. Lorsque la partie mobile 16 de ladite assise se fixe sur l'une des deux autres places 24, 26 de la banquette 10, lesdites places peuvent se recentrer vers le milieu afin de les éloigner des portes latérales pour améliorer le confort des passagers.

Bien entendu, l'invention n'est pas limitée au mode de réalisation décrit, fourni à titre d'exemple illustratif et non limitatif. En effet, on peut prévoir un autre type de moyen de fixation comme un moyen de fixation permettant une sortie en force de la partie mobile 16 ou un autre moyen d'actionnement du déverrouillage. Par ailleurs, la banquette 10 peut ne comporter que « deux places » et passer à une configuration « une place » pour accueillir un enfant par déplacement de la partie 16 mobile. Enfin, si la banquette comporte « trois places », la partie mobile 16 de la banquette 10 peut être un morceau de coussin d'assise latérale.

## Revendications

1. Banquette (10) de véhicule comprenant une assise (12) à au moins « deux places » modulable pour permettre le transport sécurisé d'un enfant **caractérisé en ce qu'**une partie (16) de l'assise (12) formant une place, munie de moyens de fixation (18), est mobile pour se fixer sur une autre place (24) de la banquette (10) de manière à être utilisée en tant que réhausse d'assise.

2. Banquette selon la revendication 1 , **caractérisée en ce que** l'assise (12) comprend « trois places » et que la partie (16) mobile de ladite assise se fixe sur l'une des deux autres places (24,26) de la banquette (10).

3. Banquette selon l'une des revendications 1 ou 2, **caractérisée en ce que** la partie mobile (16) est l'assise centrale de la banquette (10).

4. Banquette selon l'une des revendications précédentes, **caractérisée en ce qu'**un évidement (20) est libéré pour constituer une zone de rangement disponible pour les passagers de la banquette (10) lorsque la partie mobile (16) est utilisée en tant que réhausse d'assise.

5. Banquette selon l'une des revendications précédentes, **caractérisée en ce que** les moyens de fixations (18) sont des pattes inférieures d'accrochage qui sont destinées à coopérer avec des éléments d'ancrage (28).

6. Banquette selon la revendication 5, **caractérisée en ce que** les pattes inférieures d'accrochage sont constituées de deux éléments (30) et (32) mobiles.

7. Banquette selon l'une des revendications 5 ou 6, **caractérisée en ce que** les éléments d'ancrage (28) sont des boucles en fil métallique.

8. Banquette selon l'une des revendications précédentes, **caractérisée en ce que** la partie (16) mobile se verrouille ou déverrouille de l'assise (12) en actionnant une poignée (22) située sous ladite partie (16) permettant d'écarter les deux éléments (30) et (32) formant le moyen de fixation (18).

9. Banquette selon l'une des revendications précédentes, **caractérisée en ce qu'**il s'agit d'une banquette arrière de véhicule.

10. Banquette selon l'une des revendications précédentes, **caractérisée en ce que** lorsque la partie (16) mobile de ladite assise se fixe sur l'une des deux autres places (24,26) de la banquette (10), lesdites places peuvent se recentrer vers le milieu.
